# FASCICULE DE BREVET EUROPEEN

(11) **EP 1 188 630 B1**
(45) Date de publication et mention de la délivrance du brevet: **04.11.2009**
(21) Numéro de dépôt: 01402303.0
(22) Date de dépôt: 06.09.2001
(51) Int. Cl.: B60T 7/12

(54) **Procédé et dispositif de commande de freinage**
Verfahren und Vorrichtung zur Bremssteuerung
Method and device for controlling the braking

(30) Priorité: 13.09.2000 FR 0011629
(43) Date de publication de la demande: 20.03.2002
(73) Titulaire: RENAULT S.A.S., 92100 Boulogne Billancourt (FR)
(72) Inventeur: Bodin, Pascal, 78280 Guyancourt (FR); Guillerey, Bernard, 78550 Richebourg (FR)

(56) Documents cités:
- WO-A-82/02176
- DE-A- 3 909 907
- DE-A- 4 332 459
- US-A- 5 415 467

## Description

La présente invention concerne le domaine des véhicules automobiles, voitures particulières, véhicules de transport en commun, véhicules de transport de marchandises, engins spéciaux, agricoles, de manutention, de travaux, etc.

Les freins de parking automatiques pour véhicules permettent un gain de place et un confort d'utilisation plus élevé pour le conducteur.

On connaît par le document JP-A-7 144 623, un frein de parking qui assure le serrage des roues de façon automatique, si le mode d'arrêt est commandé, si la vitesse du véhicule est inférieure à une valeur prescrite, et si un freinage est en cours.

L'invention propose d'améliorer les freins de parking automatiques.

L'invention propose de nouvelles prestations accroissant la sécurité d'utilisation du véhicule.

Le procédé de commande, selon un aspect l'invention, est destiné à un moyen de freinage d'un véhicule. On exerce un freinage de caractéristiques déterminées, on détecte une variation d'accélération du véhicule, et on en déduit si le véhicule est en mouvement ou non.

De préférence, on détecte la variation d'accélération longitudinale du véhicule. La détection de la variation d'accélération sert de détection de mouvement du véhicule.

De préférence, si le véhicule est en mouvement, on exerce un freinage destiné à ralentir ledit véhicule.

De préférence, si le véhicule n'est pas en mouvement, on exerce un freinage destiné à maintenir à l'arrêt ledit véhicule.

Dans un mode de réalisation de l'invention, si le moteur du véhicule est en fonctionnement, on exerce un freinage destiné à ralentir ledit véhicule tant que le conducteur actionne un organe de commande de freinage.

Dans un mode de réalisation de l'invention, après relâchement par le conducteur dudit organe de commande de freinage, si une variation d'accélération du véhicule a eu lieu, on n'exerce plus de freinage.

Dans un mode de réalisation de l'invention, après relâchement par le conducteur dudit organe de commande de freinage, si une variation d'accélération du véhicule n'a pas eu lieu, on exerce un freinage destiné à maintenir à l'arrêt ledit véhicule.

L'invention concerne également un dispositif de commande d'un moyen de freinage d'un véhicule comprenant un moyen pour exercer un freinage de caractéristiques déterminées, un moyen pour détecter une variation d'accélération du véhicule et un moyen pour en déduire si le véhicule est en mouvement ou non.

Avantageusement, le dispositif de commande comprend un calculateur, des moyens mémoires et des instructions stockées dans les moyens mémoires.

Avantageusement, le moyen pour détecter une variation d'accélération du véhicule est un capteur, par exemple du type à niveau de liquide.

Avantageusement, le dispositif de commande est prévu pour un frein de parking automatique.

Ainsi en l'absence d'information relative à la vitesse des roues du véhicule, l'invention permet de déterminer si le véhicule se déplace ou non et d'appliquer une action de freinage d'intensité adaptée à l'état du véhicule, en déplacement ou à l'arrêt.

La présente invention sera mieux comprise et d'autres avantages apparaîtront à la lecture de la description détaillée d'un mode de réalisation pris à titre d'exemple nullement limitatif et illustré par les dessins annexés, sur lesquels :
- la figure 1 est une vue schématique d'un véhicule équipé d'un frein automatique; et
- la figure 2 est un organigramme d'étapes de procédé selon un aspect de l'invention.

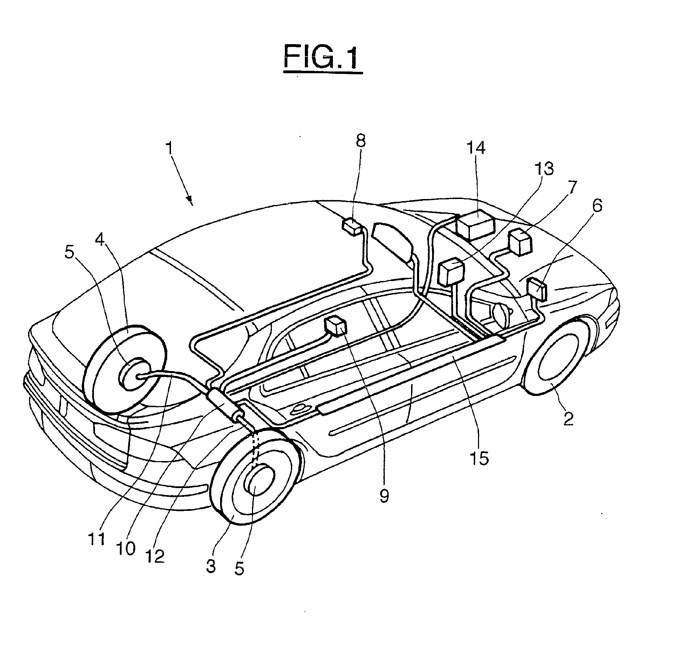

Comme on peut le voir sur la figure 1, un véhicule référencé 1 dans son ensemble est pourvu de deux roues avant 2, dont une seule est visible, équipées de freins et de deux roues arrière 3, 4 équipées de freins 5, d'un groupe motopropulseur commandé par un calculateur 6 et, de façon optionnelle, d'un système antiblocage de freins 7 relié à quatre capteurs de paramètres de rotation, chacun associé à une roue avant 2 ou arrière 4. Dans l'habitacle du véhicule, est prévu au moins un bouton de commande de freinage de parking 8.

Le véhicule 1 comprend, en outre, un dispositif de commande de freinage se présentant sous la forme d'un boîtier 9 pourvu d'une unité de calcul, du genre à processeur, de moyens mémoire, d'un programme de commande et d'actionneurs 10 agissant sur des câbles 11 et 12 aptes à commander mécaniquement le serrage des freins arrière 5 dédié aux roues arrière 4.

Le bouton de commande de freinage 8 est relié au boîtier 9. Le calculateur 6 du groupe motopropulseur est également relié au boîtier 9 pour lui fournir une information relative à un état de marche ou d'arrêt dudit groupe motopropulseur.

Le véhicule est pourvu d'un capteur 13 d'accélération longitudinale relié au boîtier 9. Bien entendu, le boîtier 9 comprend, en outre, une horloge temporelle. Le capteur 13 peut se présenter sous la forme d'un bain électriquement dans lequel trempent deux électrodes, disposées selon la longueur du véhicule. Le bain se déplace selon l'accélération qu'il subit et le contact entre les électrodes est établi ou interrompu selon ladite accélération. On peut, par exemple, prévoir un seuil l'accélération à 1,5 m*s⁻². L'ensemble des éléments consommateurs d'énergie électrique est relié une batterie 14. L'échange d'information entre les différents éléments est assuré par un bus de communication 15, par exemple de type CAN.

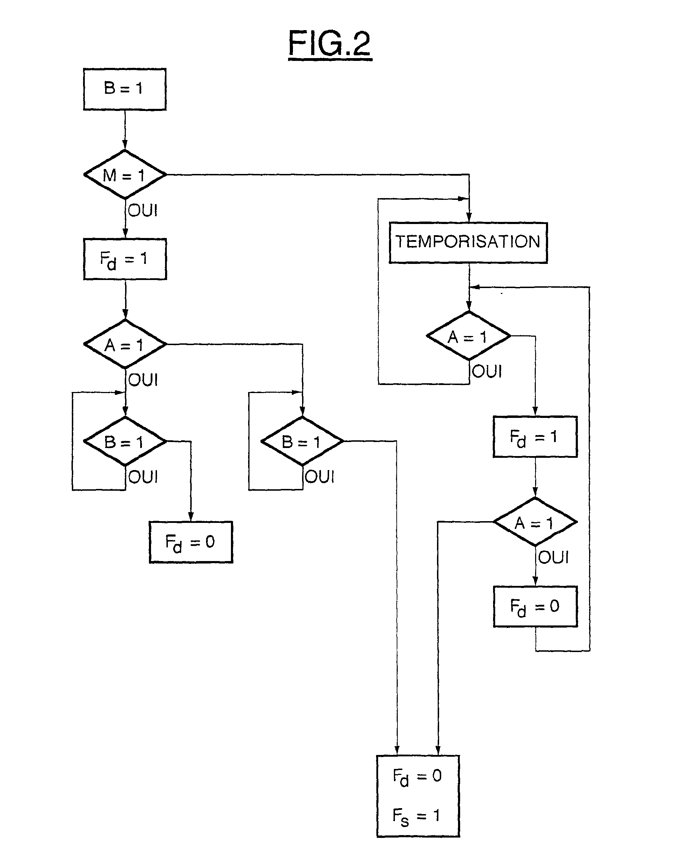

Le dispositif de commande de freinage fonctionne, comme illustré sur la figure 2. L'action du conducteur sur le bouton 8 de commande de freinage de parking fait passer une variable B prévue dans un algorithme dont le code est stocké dans des moyens mémoire du boîtier 9 et relative à l'état du bouton 8 à la valeur 1. B passe à 0 dès que le bouton 8 est relâché.

Soit M une variable qui vaut 0 si le groupe motopropulseur est arrêté et 1 si le groupe motopropulseur est en fonctionnement. Soit A une variable relative à l'accélération longitudinale valant 0 si l'accélération est nulle ou inférieure à une valeur prédéterminée. A vaut 1, si le l'accélération est non nulle ou si elle est supérieure à ladite valeur prédéterminée. Soit Fₛ une variable de commande de l'activation du freinage dit statique, c'est à dire de forte valeur. Si Fₛ = 0, le freinage statique n'est pas appliqué. Si Fₛ = 1, le freinage statique est appliqué. Soit F_{d} une variable de commande de l'activation du freinage dit dynamique, c'est à dire de faible valeur. Si F_{d} = 0, le freinage dynamique n'est pas appliqué. Si F_{d} = 1, le freinage dynamique est appliqué.

A partir d'un état : B = 1, on effectue un test sur la variable M. Si M vaut 1, on commande F_{d} = 1 et on effectue un test sur la variable A. Si A vaut 1, on effectue un test sur la variable B. Si B vaut 1, on recommence le même test. Si B vaut 0, on commande F_{d} = 0. En d'autres termes en cas d'action sur le bouton 8, moteur tournant et véhicule en mouvement, on interrompt le freinage dynamique dès que le conducteur relâche le bouton 8.

Si A vaut 0, on effectue un test sur la variable B. Si B vaut 1, on recommence le même test. Si B vaut 0, on commande F_{d} = 0 et Fₛ = 1. En d'autres termes en cas d'action sur le bouton 8, moteur tournant et véhicule à l'arrêt, on interrompt le freinage dynamique dès que le conducteur relâche le bouton 8 et on passe en freinage statique.

Si M vaut 0, on déclenche une temporisation, par exemple d'environ trois secondes à l'issue de laquelle on effectue un premier test sur la variable A. Si A vaut 1, on déclenche à nouveau la temporisation et on recommence le premier test sur la variable A. Si A vaut 0, on commande F_{d} = 1 et on effectue un second test sur la variable A. Si A vaut 1, on commande F_{d} = 0 et on déclenche à nouveau la temporisation et on recommence le premier test sur la variable A. Si A vaut 0, on commande F_{d} = 0 et Fₛ = 1. En d'autres termes, en cas d'action sur le bouton 8, moteur arrêté et véhicule en mouvement, on attend l'arrêt du véhicule puis on applique le freinage statique, même si l'action sur le bouton 8 n'a pas été poursuivie.

Le capteur 13 peut également servir à détecter l'inclinaison du véhicule par rapport à l'horizontale pour assurer un effort de freinage statique en fonction de l'inclinaison.

La présente invention permet d'augmenter de façon considérable la sécurité de fonctionnement d'un frein de parking automatique en interdisant l'application d'un effort de freinage important susceptible d'être dangereux en provoquant un tête-à-queue si le véhicule est en mouvement et en appliquant un effort de freinage modéré permettant d'assister le circuit de freinage principal.

## Revendications

1. Procédé de commande d'un moyen de freinage de parking automatique d'un véhicule, dans lequel on exerce un freinage de caractéristiques déterminées, on détecte une variation d'accélération du véhicule, et on en déduit si le véhicule est en mouvement ou non.

2. Procédé de commande selon la revendication 1, dans lequel on détecte la variation d'accélération longitudinale du véhicule.

3. Procédé de commande selon la revendication 1 ou 2, dans lequel si le véhicule est en mouvement, on exerce un freinage destiné à ralentir ledit véhicule.

4. Procédé de commande selon l'une quelconque des revendications précédentes, dans lequel si le véhicule n'est pas en mouvement, on exerce un freinage destiné à maintenir à l'arrêt ledit véhicule.

5. Procédé de commande selon l'une quelconque des revendications précédentes, dans lequel si le moteur du véhicule est en fonctionnement, on exerce un freinage destiné à ralentir ledit véhicule tant que le conducteur actionne un organe de commande de freinage.

6. Procédé de commande selon la revendication 5, dans lequel après relâchement par le conducteur dudit organe de commande de freinage, si une variation d'accélération du véhicule a eu lieu, on n'exerce plus de freinage.

7. Procédé de commande selon la revendication 5 ou 6, dans lequel après relâchement par le conducteur dudit organe de commande de freinage, si une variation d'accélération du véhicule n'a pas eu lieu, on exerce un freinage destiné à maintenir à l'arrêt ledit véhicule.

8. Dispositif de commande d'un moyen de freinage de parking automatique d'un véhicule, **caractérisé par le fait qu'**il comprend un moyen pour exercer un freinage de caractéristiques déterminées, un moyen pour détecter une variation d'accélération du véhicule et un moyen pour en déduire si le véhicule est en mouvement ou non.

## Claims

1. Method of controlling an automatic parking brake means of a vehicle, in which method braking of determined characteristics is applied, a variation in acceleration of the vehicle is detected, and from this it is determined whether or not the vehicle is moving.

2. Control method according to Claim 1, in which it is the variation in longitudinal acceleration of the vehicle that is detected.

3. Control method according to Claim 1 or 2, in which, if the vehicle is moving, braking intended to slow the said vehicle is applied.

4. Control method according to any one of the preceding claims, in which if the vehicle is not moving, braking intended to keep the said vehicle stationary is applied.

5. Control method according to any one of the preceding claims, in which if the vehicle engine is running, braking intended to slow the said vehicle down is applied for as long as the driver is actuating a brake control member.

6. Control method according to Claim 5, in which after the driver has released the said brake control member, if the vehicle undergoes a variation in acceleration, braking is no longer applied.

7. Control method according to Claim 5 or 6, in which after the driver has released the said brake control member, if the vehicle does not experience a variation in acceleration, braking intended to keep the said vehicle stationary is applied.

8. Device for controlling an automatic parking brake means of a vehicle, **characterized in that** it comprises a means for applying braking of determined characteristics, a means for detecting a variation in the acceleration of the vehicle and a means for deducing from this whether or not the vehicle is moving.

## Patentansprüche

1. Verfahren zur Steuerung eines automatischen Feststellbremsmittels für ein Fahrzeug, wobei eine Bremsung mit bestimmten Eigenschaften durchgeführt wird, eine Änderung der Fahrzeugbeschleunigung erfasst wird und abgeleitet wird, ob das Fahrzeug in Bewegung ist oder nicht.

2. Steuerverfahren nach Anspruch 1, wobei die Änderung der Längsbeschleunigung des Fahrzeugs erfasst wird.

3. Steuerverfahren nach Anspruch 1 oder 2, wobei eine Bremsung durchgeführt wird, die das Fahrzeug verlangsamen soll, wenn das Fahrzeug in Bewegung ist.

4. Steuerverfahren nach einem der vorhergehenden Ansprüche, wobei eine Bremsung durchgeführt wird, die das Fahrzeug im Stillstand halten soll, wenn das Fahrzeug nicht in Bewegung ist.

5. Steuerverfahren nach einem der vorhergehenden Ansprüche, wobei eine Bremsung durchgeführt wird, die das Fahrzeug verlangsamen soll, solange der Fahrer ein Bremsbetätigungselement betätigt, wenn der Motor des Fahrzeugs in Betrieb ist.

6. Steuerverfahren nach Anspruch 5, wobei nach Loslassen des Bremsbetätigungselements durch den Fahrer keine Bremsung mehr durchgeführt wird, wenn eine Beschleunigungsänderung des Fahrzeugs stattgefunden hat.

7. Steuerverfahren nach Anspruch 5 oder 6, wobei nach Loslassen des Bremsbetätigungselements durch den Fahrer eine Bremsung durchgeführt wird, die das Fahrzeug im Stillstand halten soll, wenn keine Beschleunigungsänderung des Fahrzeugs stattgefunden hat.

8. Vorrichtung zur Steuerung eines automatischen Feststellbremsmittels für ein Fahrzeug, **dadurch gekennzeichnet, dass** sie ein Mittel zur Durchführung einer Bremsung mit bestimmten Eigenschaften, ein Mittel zur Erfassung einer Beschleunigungsänderung des Fahrzeugs und ein Mittel zum Ableiten, ob sich das Fahrzeug in Bewegung befindet oder nicht, umfasst.
